(19)

Europäisches
Patentamt
European
Patent Office
Office européen
des brevets

(11) **EP 3 413 153 A1**

(12) **EUROPEAN PATENT APPLICATION**

(43) Date of publication:
**12.12.2018 Bulletin 2018/50**

(51) Int Cl.:
***G05B 23/02*** *(2006.01)*

(21) Application number: **17175066.4**

(22) Date of filing: **08.06.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ABB Schweiz AG
5400 Baden (CH)**

(72) Inventors:
• **DOMINGUEZ, Luis
5200 Brugg (CH)**

• **SAARELA, Antti
03400 Vihti (FI)**
• **TERVO, Kalevi
02720 Espoo (FI)**
• **SÄYNEVIRTA, Simo
02170 Espoo (FI)**

(74) Representative: **ABB Patent Attorneys
c/o ABB Schweiz AG
Intellectual Property CH-IP
Brown Boveri Strasse 6
5400 Baden (CH)**

(54) **METHOD AND DISTRIBUTED CONTROL SYSTEM FOR CARRYING OUT AN AUTOMATED INDUSTRIAL PROCESS**

(57)    A system and method for carrying out an automated industrial process by an industrial system (1) is provided. The industrial system having process equipment (10) and a distributed control system comprising a network (30) and a data aggregator module (50) connected to the network.

The method comprises receiving, over the network (30), measurement data (64) relating to the industrial process; obtaining a measurement data reliability measure (66) indicative of the reliability of the measurement data (64); processing the measurement data by a data aggregation function (54) to determine an aggregated data (74); determining an aggregated data reliability measure (76) indicative of the reliability of the aggregated data (74) based on the measurement data reliability measure (66) and the data aggregation function (54); and sending, over the network, the aggregated data (74) and the aggregated data reliability measure (76).

**FIG. 1**

**Description**

Aspects of the invention relate to a method of carrying out an automated industrial process by an industrial system having a distributed control system, wherein a data aggregator module processes measurement data relating to the industrial process to determine an aggregated data. The aggregated data may functional hierarchy diagram be provided to a higher functional manufacturing control level. Further aspects relate to a distributed control system for the industrial system and having such a data aggregator module.

Technical background:

Large scale industrial systems ranging from production processes to transportation systems are operated with a complex infrastructure of digitalized information and control systems. Starting from low level (field level) process equipment such as sensors and actuators, measurement data such as sensor and actuator measurements are delivered to an automation and control system.

The automation and control system is typically integrated and organized according to various functional manufacturing control levels, starting with a distributed control system (DCS) on a direct control level. The DCS receive the measurement data from the process equipment and then communicate with higher level systems like ERP (enterprise resources planning) and PIMS (process information management system) systems. Common uses of the information gathered at the higher levels (site level and fleet level) are reporting and analysis of the processes.

For these higher level tasks, the quality and reliability of the input data is of high importance for the output to be useful.

Traditionally industrial information systems operate on single point data, meaning that all information is treated as absolutely accurate, representative and reliable. This is rarely the case in real-world measurement and forecasting environment, in which many uncertainties are present. Sources of uncertainty may include lack of information on the current state of the system, noisy, corrupted and/or incomplete measurements arising from worn or broken devices. The traditional approach, in which these uncertainties are ignored, can lead to biased results when information is utilized in higher level tasks such as forecasting and decision making. These biases can lead to significant economic losses or loss of confidence into information provided by the system. Loss of confidence in turn can lead into overcautious decision making leaving untapped potential unharvested, and in the worst case leads to catastrophically erroneous predictions and decision-making.

To tackle this problem, stochastic techniques have been proposed, which take into account data quality and/or uncertainties associated with the input values, or probabilities of different scenarios. Examples of such high-level operations are described, for example, in WO 2016/020762, US 2017/103043, JP 2008-3009690, WO 2010/137488, and in DE 6272480.

Another aspect of reliability is data usability. Some data points may be missing or collected but known to be erroneous or collected during abnormal process stages like start-up, process malfunction etc. In order to efficiently work with the collected information the data needs to be cleaned first. This applies especially for, e.g., machine learning schemes, for which training data or pre-validated data is used to construct a static representation of a real world phenomenon. Especially in automated and repetitive schemes it can be highly useful to separate regular and representative data points from erroneous, abnormal or susceptive data points, herein described as outliers. Classical regression and machine learning models can be distorted greatly even by a small amount of such outliers in the training data. In order efficiently engineer usable and reliable models, the information system should provide precleaned data and means for validating the reliability of data it provides. However, keeping track of data outliers and cleaning the data is tedious and can be unreliable, due to the enormous amount of data typically used for these purposes.

Thus, there is a need for a way of handling the data that avoids the above-mentioned drawbacks and/or that enables reliable high-level functions of the industrial system.

Summary of the invention

In view of the above, a method of carrying out an automated industrial process by an industrial system according to claim 1, and a distributed control system according to claim 11 are provided.

According to an aspect, a method of carrying out an automated industrial process by an industrial system is provided. The method is carried out in an industrial system having process equipment and a distributed control system. The distributed control system comprises a network and a data aggregator module connected to the network. The method comprises the following steps carried out by the data aggregator module:

- Receiving, over the network, measurement data relating to the industrial process;

- Obtaining (e.g., receiving, retrieving from a storage, or calculating) a measurement data reliability measure indicative of the reliability of the measurement data;

- Processing the measurement data by a data aggregation function to determine an aggregated data;

- Determining an aggregated data reliability measure indicative of the reliability of the aggregated data based on the measurement data reliability measure and the data aggregation function;

- Sending, over the network, the aggregated data and the aggregated data reliability measure.

According to a further aspect, a distributed control system for an industrial system, adapted for carrying out an automated industrial process, is provided. The distributed control system comprises a network and a data aggregator module. The data aggregator module comprises:

- A network interface for connecting the data aggregator module to the network, for receiving over the network measurement data from process equipment of the industrial system;

- A storage for storing the measurement data and a measurement data reliability measure indicative of the reliability of the measurement data;

- A data aggregation function for processing the measurement data to obtain an aggregated data;

- A reliability measure determining function for determining an aggregated data reliability measure indicative of the reliability of the aggregated data based on the measurement data reliability measure and the data aggregation function,

- The network interface being adapted for sending, over the network, the aggregated data and the aggregated data reliability measure.

Advantages according to some aspects of the invention include the following: According to aspects of invention, it becomes possible to process, estimate and classify the uncertainty (i.e. reliability) not only of the data directly collected by sensors and other process equipment, but also at higher (aggregated) levels of the information platform (e.g. cloud platform). Such higher-level information may be stored at various levels/edges (e.g. cloud nodes) or at a central repository (e.g. central cloud), and utilized by various functions of the respective level, e.g. an analytic solution residing in or connected to the platform. Thereby, an estimation of data reliability is made reliably available at the various levels of the system (e.g., nodes of the platform). As a consequence, for example, statistical decision-making may be drastically improved by having not only data points available, but also an indication of their reliability.
Thus, an advantage is that the trustworthiness of data is made available in a unified framework also for higher level tasks. Thus, it is possible to incorporate an information about the level of confidence also regarding such higher-level information. Previously, this type of information was often lost at some point along the chain of data aggregation. By keeping track of the aggregated data reliability measure, also the higher-level functions of the industrial system are able to access information about the data reliability and, therefore, may be able to give more useful and reliable results.
Further advantages, features, aspects and details that can be combined with embodiments described herein are evident from the dependent claims, the description and the drawings.

Brief description of the Figures:

The details will be described in the following with reference to the figures, wherein

Fig. 1              is a schematic view of an industrial system having a distributed control system according to an embodiment of the invention;
Figs. 2 and 3     are schematic views illustrating data aggregation in an industrial system having a distributed control system according to a further embodiments of the invention;
Fig. 4              is a schematic view of a further distributed control system according to an embodiment of the invention.

Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

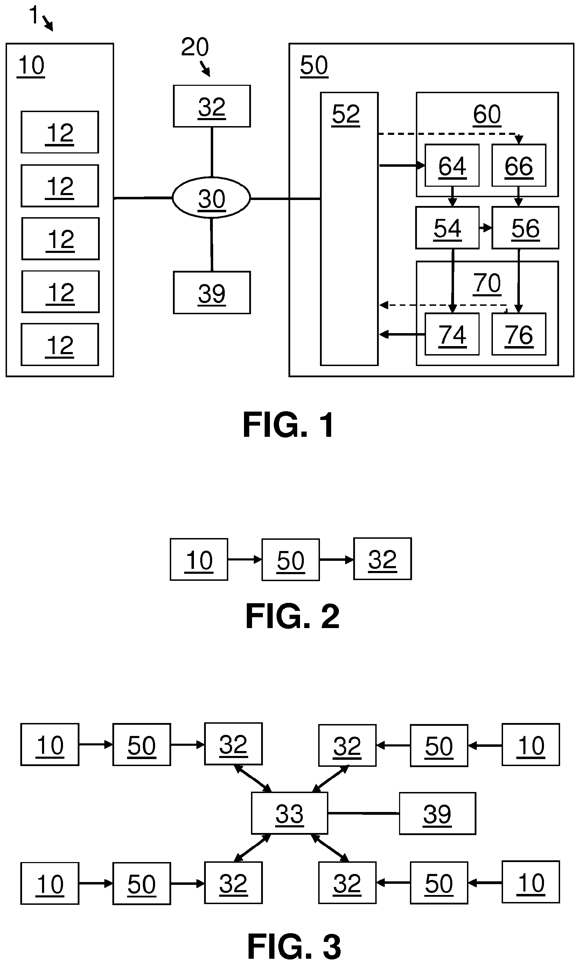

Fig. 1 is a schematic view of an industrial system 1 according to an embodiment of the invention for carrying out an automated industrial process. The industrial system 1 has process equipment 10 and a distributed control system 20.

The distributed control system 20 has a network 30 and a data aggregator module 50. Both the process equipment 10 and the data aggregator module 50 are connected to the network 30. In addition, Fig. 1 shows a database (e.g. cloud storage) 32, and a higher-level device 39 which are also attached to the network 30.

The process equipment 10 comprises a number of devices 12, such as sensors or actuators or the like, which are used in the automated industrial process and/ or which measure process-relevant data. These devices 12 generate various measurement data relevant to the industrial process.

The data aggregator module 50 has the following sub-components: A network interface 52 for providing a data connection of the data aggregator module 50 to the network 30; a storage 60; a data aggregation function 54; and a reliability measure determining function 56.

During operation, the process equipment 10 generates various measurement data relevant to the industrial process, and sends this data over the network 30 to the data aggregator module 50. This sending may be performed via lower-level control infrastructure such as a busbar interface and over process-near PLCs (not shown). During transmission, the measurement data may be converted, filtered and/or pre-processed in any other manner.

The data aggregator module 50 receives the measurement data via the network interface 52, and stores it as measurement data 64 in its storage 60. In addition, the data aggregator module 50 also obtains and stores in its storage 60 a measurement data reliability measure 66 indicative of the reliability of the measurement data 64. The measurement data reliability measure 66 may, for example, be an estimate of the variance of the measurement data; and it may be sent by the process equipment 10 over the network 30 along with the measurement data. Other examples of the measurement data reliability measure 66 and of steps for obtaining it are described further below.

After having obtained and stored the measurement data 64 and the measurement data reliability measure 66, the measurement data 64 is input to the data aggregation function 54. The data aggregation function 54 processes the measurement data 54 to determine an aggregated data 74. "Aggregated" is herein understood to mean that an aggregated data entry is determined based on a plurality of measurement data entries, so that the aggregated data has a lower dimension than the measurement data, i.e., the measurement data is combined into fewer aggregated data. The lower dimension may be defined, for example, by a reduced amount of data, or by a reduced number and/or complexity of indices and/or index values identifying the data.

The reliability measure determining function 56 receives the measurement data reliability measure 66 and determines, from the measurement data reliability measure 66 and the data aggregation function 54, an aggregated data reliability measure 76 indicative of the reliability of the aggregated data 74. The aggregated data reliability measure 76 may, for example, be a combined variance of the aggregated data obtained by combining individual variances (measurement data reliability measure 66) of the measurement data. More details and additional examples for obtaining the aggregated data reliability measure are given below.

The aggregated data 74 and the aggregated data reliability measure 76 are stored together in an aggregated data structure (class) 70. This aggregated data structure 70 is then handed to the network interface 52 and sent over the network 30 to, e.g. the database 32 or to the higher-level device 39.

Figs. 2 to 4 are schematic views of data aggregation architectures in industrial systems having distributed control systems according to further embodiments of the invention. In Figs. 2 to 4, the reference signs of Fig. 1 are used, and the description of each of the previous Figures also applies to the subsequent Figures unless specified otherwise. In Figs. 2 to 4, mainly the flow of data is illustrated, and other details such as the network or the inner structure of the data are not shown.

Fig. 2 shows that the measurement data collected by the process equipment 10 is received and aggregated by the aggregation function of the aggregator module 50, and the resulting aggregated data is stored in database 32. In addition, also the corresponding measurement data reliability measure is obtained (e.g., received) by the aggregator module 50. As described above, the reliability measure determining function of the aggregator module 50 determines the aggregated data reliability measure. The aggregated data reliability measure is then stored in database 32 as well, preferably together with the aggregated data in a joint aggregated data structure (class) 70 as described above.

Figure 3 depicts a schematic of a distributed control system according to another embodiments of the invention, having a data aggregation architecture being a cloud platform and encompassing the architecture shown in Fig. 2. Here, the cloud platform has four cloud nodes, each cloud node having an aggregator module 50 and database 32 as shown in Fig. 2. The databases 32 are cloud node databases. Thus, the aggregated data and aggregated data reliability measures are stored at the respective nodes (cloud node databases 32) of the cloud platform.

The cloud platform also comprises a central cloud 33. The central cloud makes the data of the individual cloud nodes (cloud node databases 32) available to all of the cloud nodes, e.g., by storing synchronized data of the individual cloud nodes. Thus, the aggregated data and aggregated data reliability measures reside at the individual cloud nodes (cloud node databases 32) and are also available to all other cloud nodes via the central cloud 33 which is accessible by each of the cloud nodes. Thereby, all aggregated data and aggregated data reliability measures are made available to each of the individual cloud nodes.

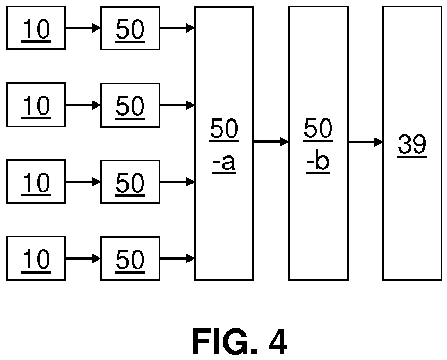

Fig. 4 describes a further empdiment having multiple data aggregator modules. Here, again the measurement data collected by the process equipment 10 is received and aggregated by the aggregation function of the aggregator module 50 being a first aggregator module. The resulting first aggregated data and first aggregated data reliability measure are then handed to a second aggregator module 50-a.

The second aggregator module 50-a has an analogous structure as the (first) aggregator module 50 shown in Fig. 1. The (network interface of the) second aggregator module 50-a receives the first aggregated data and first aggregated data reliability measure from the first aggregator module 50-a, and uses them, within the second aggregator module 50-a, as second measurement data and second measurement data reliability measure, respectively, for performing further data aggregation. The resulting second aggregated data and second aggregated data reliability measure are then handed to a third aggregator module 50-b.

The third aggregator module 50-b again has an analogous structure as the first aggregator module 50 and performs further aggregation analogously to the second aggregator module 50-b, i.e. receives the second aggregated data and second aggregated data reliability measure, performs further data aggregation and outputs the resulting third aggregated data and third aggregated data reliability measure. This procedure may be repeated by further n-th aggregator modules (not shown) to obtain ever higher-level aggregated data. The final (here: third) aggregated data and aggregated data reliability measures are then stored in a database (not shown) and/or handed to higher-level devices 39 for further processing. The intermediate (first, second) aggregated data and aggregated data reliability measures may also be stored in the database.

This embodiment shows that the distributed control system according to the present invention is particularly useful in a modular, cloud-connected architecture.

Application examples:

Next, an example is described in which uncertainty of current measurements are captured and stored in a cloud node. Therein, the measurement / aggregated data reliability measures are defined as the associated standard deviations (variances). Thus, in addition to the current value, the current estimate of the standard deviation value is obtained and stored as an additional attribute.

For example, a (single) measurement of the power consumed by a motor is stored as Motor1_power.CurrentHistory.value = 1000

In addition, the variance (standard deviation) is obtained by analyzing previously collected values over a time window or by any other method described herein, and is for example stored as follows:

Motor1_power.CurrentHistory.st = 100

Motor1_power.CurrentHistory.Representativeness = 80

Motor1_power.CurrentHistory.Uncertainty = 80

In addition, e.g., averages may be given, which allow an even more straightforward calculation of the variances based on the individual measurements. For example:

Motor1_power.AVG1minute.value = 1000

Motor1_power.AVG1minute.std = 100

Motor1_power.AVG1minute.Uncertainty = 80

Based on this measurement data, the aggregator module may combine the mean, variance or standard deviations from different sets of data stored at different temporal or spatial resolutions. For example, consider the case with two sets of data containing $n_1$ and $n_2$ observations with means $\bar{X}_1$ and $\bar{X}_2$ and variances $s_1^2$ and $s_2^2$. The combined mean $\bar{X}_c$ and combined variance $S_c^2$ may then be obtained as follows, by combining the individual variances:

$$S_c^2 = \frac{n_1 s_1^2 + n_2 s_2^2 + n_1(\bar{X}_1 - \bar{X}_c)^2 + n_2(\bar{X}_2 - \bar{X}_c)^2}{n_1 + n_2}$$

$$\bar{X}_c^2 = \frac{n_1 \bar{X}_1 + n_2 \bar{X}_2}{n_1 + n_2}$$

Furthermore, other statistical moments such as skewness or kurtosis could be calculated as well and aggregated for obtaining additional information within the aggregated data reliability measure. These statistical moments provide additional information of the nature of the distribution.

In the above examples, the standard deviation, i.e. variance, was the simplest way of representing uncertainty, but more advanced methods may be employed as well. For example, dynamic learning techniques may be employed as reliability measures as well, in addition to or in place of the variance. This approach may, for example, employ known machine learning techniques to regress a model for Gaussian Processes and Kalman Filter techniques to estimate the state at any instance in time and space.

For example, the measurement data may first be fed to a reliability analyser module to obtain the associated measurement data reliability measure (e.g., by a neural network according to a machine learning algorithm, as described herein). Then, the measurement data, together with the associated measurement data reliability measure, may be input to a Kalman filter for obtaining the aggregated data (e.g., a state prediction or estimation of the industrial system) together with an associated aggregated data reliability measure. An advantage of this method is that it provides not only an estimate of the uncertainty or measure of reliability but also predictive values at temporal and spatial resolutions.

This embodiment may be applied, for example, in a frequency converter, which monitors data with a high sampling rate (e.g., sampling interval below 1 millisecond). A cloud node of the distributed control system, having the aggregator module, is then able to continuously assess the measurement values and their statistics, but also the reliability data of the measurements. Further, the cloud node is able to provide the reliability data in addition to the actual measurement data or aggregated data at different temporal resolutions (e.g. 1 second).

Further aspects and details:

Next, individual aspects of the industrial system, the distributed control system and the method are described in more detail. Therein, the reference numbers of Figs. 1 to 4 are used merely for illustration. The aspects are not limited to any particular embodiment. Instead, any aspect described herein can be combined with any other aspect(s) or embodiments described herein unless specified otherwise.

Measurement data:

First, aspects relating to measurement data are described. According to an aspect, the measurement data is sensor data from sensor(s) of the industrial system. The measurement data can, for example, be raw data or pre-processed, pre-aggregated data. According to a particular aspect, the data aggregator module is a second data aggregator module, and the (second) measurement data is (first) aggregated data by a first data aggregator module. In this case, the (second) measurement data reliability measure is the first aggregated data reliability measure.

According to a further aspect, the measurement data is provided as a time series, preferably as a continuous stream of data points in time. The measurement data may comprise measurement values and corresponding time stamps.

Types of reliability measure:

Next, aspects relating to the measurement data reliability measure, more specifically to the types of measurement data reliability measure are described. According to an aspect, the measurement data reliability measure includes a discrete data entry (e.g., carrying a binary information). The measurement data reliability measure may, for example, include an indication of auto-corrected data, simulated data, inconsistent data and/or outlier data.

For example, specific sensor devices, which may contain acceptable levels of reliability, may automatically be classified or "flagged" as reliable by the platform, and be available for critical/relevant computations.

In another example, a sensor measurement may be critical and used by additional components of the control system, but may not be readily available. In this case a simulated sensor measurement may be computed with the help of historical data and/or other sensors information, including associated measurement data reliability measures, for obtaining a predicted value for the measurement data. This predicted value for the measurement data may then be flagged as being merely simulated data, so that it can, for example, be excluded from future computations of a predicted value. In this manner, the input for predicted values is limited to data that has been measured without simulated data.

According to a further aspect, the measurement data reliability measure includes an indication of sensor reliability (e.g., obtained from multiple sensor measurements in time or space, which are correlated with each other and should be consistent with each other). According to a further aspect, the measurement data reliability measure includes an indication of a normal or abnormal process stage. An abnormal process stage may be, for example, startup, shutdown, or an error stage of the process).

According to a further aspect, the measurement data reliability measure includes a numerical value indicating variance or uncertainty quantitatively, e.g., (quasi-)continuously. For example, the measurement data reliability measure may include a variance or a numerical indication of trustworthiness of the measurement data. According to a further aspect, the measurement data reliability measure includes an information about the (measured or expected) statistical distribution of the measurement data, such as one or more variance coefficient (lowest-order and optionally also higher-order coefficients), any other measure of the statistical distribution, or a statistical distribution function.

According to a further aspect, the measurement data has a plurality of data subsets or data points (e.g., one data point per time unit); and a respective measurement data reliability measure is defined for each of the data points or subsets. According to a further aspect, the measurement data has a plurality of classes (e.g., one class per sensor or sensor type); and a respective reliability measure is defined for each class of the measurement data.

According to a further aspect, the measurement data reliability measure is defined for single and multiple sensor devices.

Obtaining of reliability measure:

Next, aspects relating to the obtaining of the measurement data reliability measure are described. According to an aspect, the obtaining includes receiving of the measurement data reliability measure over the network. For example, the measurement data reliability measure may be provided by the process equipment, e.g., by a sensor or actuator.

According to an aspect, the measurement data reliability measure is assigned (e.g., by the data aggregator module or by the process equipment) based on characteristics of the measurement data and/or based on additional information such as sensor type, cross-check data, process parameters. The measurement data reliability measure generated in these manners may be a variance, but instead of the variance, also other types of measurement data reliability measure may be generated, e.g., any of the types mentioned above.

According to an aspect, the measurement data reliability measure may be generated from analysis of multiple data points within the measurement data or within a subset of the measurement data. For example, the measurement data reliability measure may be generated from analysis of stored historical values of the measurement data. In another example, the measurement data reliability measure may be generated by aggregating measurement data over time.

According to a further aspect, a joint reliability estimate of multi-variable measurement data may be obtained by aggregation of individual measurement data. For example, the measurement data reliability measure may be obtained using a multi-variable reliability model including correlations between the measurement data. Thus, according to a further aspect, the measurement data reliability measure may be based on establishing correlations between the measurement data, e.g., based on a physical model. Thus, the measurement data may be a multi-variable data, and the processing function is then adapted to determine the aggregated data as a combination of the multi-variable data, and the aggregated data reliability measure is determined by correlating individual data points of the multi-variable data. The correlation may be a temporal or spatial correlation, or may be calculated in any other manner.

According to a further aspect, the measurement data reliability measure may be obtained by a machine learning method, e.g., by a machine learning module that has been trained using training data comprising stored measurement data and associated measurement data reliability measures.

Data aggregation function:

Next, aspects relating to the data aggregation function are described. Generally, the data aggregation function is defined as a function transforming the measurement data into aggregated data, whereby a given aggregated data entry is determined based on a plurality of measurement data entries, and wherein the aggregated data has a lower dimension than the measurement data.

Examples of a data aggregation function include fourier transform functions (e.g. by fast fourier transformation, FFT), optionally with frequency filtering or frequency selection, averaging functions, smoothening functions, filtering functions, or combinations thereof.

According to an aspect, the data aggregation function may include a transfer function, e.g., determining the aggregated data as a (lower-dimensional) linear combination of the measurement data.

According to a further aspect, the data aggregation function may include a state estimating function (e.g., forecasting function) for estimating (forecasting) a state of the industrial system based on the measurement data. Optionally, the state estimating function may also use other control inputs to the industrial system or the measurement data reliability measure as further input variables for estimating the state, e.g., based on a physical model of the industrial system.

According to a further aspect, the data aggregation function determines the aggregated data based not only on the measurement data but also on the measurement data reliability measure. For example, the data aggregation function may include a weighting routine for weighting the measurement data according to the associated measurement data reliability measure. Then, for example, the forecasting function can be solved while taking into account the respective measurement data reliability measure.

According to a further aspect, the data aggregation function includes a Bayesian estimator function for calculating the aggregated data as a minimum of a Bayes risk defined as a posterior variance measure of the data aggregation function. Prferably the Bayes risk is the aggregated data reliability measure.

According to a further aspect, Data aggregation function includes a Kalman filter. The data aggregation function may for example include the above-mentioned state estimating function for estimating (e.g., forecasting) a state of the industrial system based on the measurement data. The state estimating function may include the Kalman filter for determining a state vector as the aggregated data and an associated aggregated data reliability measure. The state vector describes an estimated state of the industrial system. The Kalman filter updates the state vector and the associated reliability measure in an iterative manner by a state transition model (e.g., a transfer function), using the measurement data and the measurement data reliability measure as further input parameters.

According to a further aspect, the data aggregation function includes a weighting routine that weights the measurement data according to the respective measurement data reliability measure, in such a manner that more reliable measurement data are given a higher weight.

According to a further aspect, the data aggregation function comprises a machine learning function for pattern detection.

According to a further aspect, the data aggregation module includes a scheduling system using the aggregated data for process control. The process control may include, e.g., a feedback control loop for (re-)scheduling the process. According to a further aspect, the data aggregation module is operatively connected to a manufacturing execution system for transmitting the aggregated data and the aggregated data reliability measure to the manufacturing execution system.

Data aggregation function / determining of the aggregate data reliability measure:

Next, some further aspects relating to the determining of the aggregated data reliability measure by the data aggregation function are described. According to a further aspect, the aggregated data reliability measure is obtained by aggregating the measurement data reliability measures according to the data aggregation function.

According to a further aspect, the aggregated data reliability measure is determined taking into account pre-determined correlation coefficients between the measurement data and/or by the measurement data reliability measures. For example, if the measurement data are $m_i$, the measurement data reliability measures are variances $s_i$, and the aggregation function involves a product of $m_i * m_j$, as a portion of the aggregated data then the associated aggregated data reliability measure for the product $m_i * m_j$ may be calculated as $s_i * s_j * c_{ij}$, wherein $c_{ij}$ is a correlation coefficient between $m_i$ and $m_j$.

Integrated data structure:

Next, aspects relating to the data structure are described. According to an aspect, the control system comprises a combined data type such as a combined class, the combined data type including the measurement data and the associated reliability measure. The same data type may also be used for storing, instead of the measurement data, the aggregated data and the associated reliability measure.

The data aggregation function may be equipped for handling the combined data type as a single data unit, e.g., for input of the measurement data, for output of the aggregated data, or for both. Thus, the data aggregation function may be adapted for outputting the aggregated data and the aggregated data reliability measure in a combined manner within a single data type (class).

This combined data type solves a number of practical problems due to the shear amount of data: Even if some reliability measures were obtained, it is difficult to keep track of this information in a reliable manner if the control system does not support the reliability information inherently. For example, even if the reliability information is transferred and processed with some naming convention or the like, this induces an increase in data amount, amount of configuration data and obligatory rules for every entity addressing the data. Change management and system updates may then become problematic, due to many loosely coupled system components. All these challenges may become overwhelmingly complicated to manage in a complex multi-level setup. As a result, the reliability information may be lost or distorted in the complex chain of communication between several loosely coupled components. By defining a unified data type for the values and their reliability measure, all layers of the control system are enabled to transport, interpret and manipulate the reliability information together with the measurement data.

Network interface and network structure:

Next, aspects relating to the network are described.

According to an aspect, the control unit is connected to the process equipment via a data network. The data network may be an Ethernet network using TCP/IP such as LAN, WAN or Internet. The data network may comprise a SCADA network and/or an internal control network of the distributed control system. The network may be a distributed network extending to a remote, off-site location. The network may be a local or a global data network, and may thus be accessible globally, e.g., over internet. The network interface may support an "Internet of Things" (IOT) protocol. The network interface may be configured to receive the measurement data and/or send the aggregated data (along with the respective reliability measure) over the network, e.g., according to the IOT protocol.

According to an aspect, the data network comprises distributed storage units such as a cloud database. Depending on the application, the cloud can be in form of public, private, hybrid or community cloud. The cloud database is accessible over the network. The cloud database may comprise a central cloud and optionally cloud nodes. According to a further aspect, the aggregation module is associated to a cloud node.

According to an aspect, the data aggregator module is part of a control unit that comprises a network interface for connecting to the network. The control unit is operatively connected to the network interface for carrying out commands received from the data network, and / or for sending device status information to the data network. The commands may include a control command for controlling the process equipment to carry out tasks. The commands may include a status request. In response to the status request, or without prior status request, the control unit may be adapted for sending a status information to the network interface, and the network interface is then adapted for sending the status information over the network. The commands may include an update command including update data. In this case, the control unit is adapted for initiating an update in response to the update command and using the update data.

**Claims**

1.   A method of carrying out an automated industrial process by an industrial system (1), the industrial system having process equipment (10) and a distributed control system comprising a network (30) and a data aggregator module (50) connected to the network, the method comprising the following steps carried out by the data aggregator module (50):

   - Receiving, over the network (30), measurement data (64) relating to the industrial process;
   - Obtaining a measurement data reliability measure (66) indicative of the reliability of the measurement data (64);
   - Processing the measurement data by a data aggregation function (54) to determine an aggregated data (74);
   - Determining an aggregated data reliability measure (76) indicative of the reliability of the aggregated data (74) based on the measurement data reliability measure (66) and the data aggregation function (54);
   - Sending, over the network, the aggregated data (74) and the aggregated data reliability measure (76).

2.   A method of carrying out an automated industrial process according to claim 1, wherein the measurement data is sensor data from sensor(s) of the industrial system.

3.   A method of carrying out an automated industrial process according to any one of the preceding claims, wherein the reliability measure is at least one of:

   - An indication of auto-corrected data;
   - An indication of simulated data;
   - An indication of inconsistent data;
   - An indication of sensor reliability;
   - An indication of a normal or abnormal process stage of the industrial system;
   - A numerical value indicating variance or uncertainty.

4.   A method of carrying out an automated industrial process according to any one of the preceding claims, wherein the obtaining of the measurement data reliability measure (66) includes receiving the measurement data reliability measure from the process equipment over the network.

5. A method of carrying out an automated industrial process according to any one of the preceding claims, wherein the obtaining of the measurement data reliability measure (66) includes assigning the measurement data reliability measure is based on at least one of sensor type, cross-check data, process parameters, characteristics of the measurement data.

6. A method of carrying out an automated industrial process according to any one of the preceding claims, wherein the measurement data is a multi-variable data, and wherein the processing function is adapted to determine the aggregated data as a combination of the multi-variable data, and wherein the aggregated data reliability measure is determined by correlating individual data points of the multi-variable data.

7. A method of carrying out an automated industrial process according to any one of the preceding claims, wherein the data aggregation function outputs the aggregated data and the aggregated data reliability measure in a combined manner within a single data class.

8. A method of carrying out an automated industrial process according to any one of the preceding claims, wherein the data aggregation function determines the aggregated data in dependence of the measurement data reliability measure.

9. A method of carrying out an automated industrial process according to any one of the preceding claims, wherein the aggregated data reliability measure is determined by aggregating the measurement data reliability measures according to the data aggregation function.

10. A method of carrying out an automated industrial process according to any one of the preceding claims, wherein the aggregated data reliability measure is determined taking into account pre-determined correlations between individual measurement data.

11. A distributed control system (20) for an industrial system (1), the industrial system being adapted for carrying out an automated industrial process, the distributed control system (20) comprising a network (30) and a data aggregator module (50),
the data aggregator module (50) comprising:

   - A network interface (52) for connecting the data aggregator module (50) to the network (30), for receiving over the network measurement data from process equipment (10) of the industrial system;
   - A storage (60) for storing the measurement data (64) and a measurement data reliability measure (66) indicative of the reliability of the measurement data;
   - A data aggregation function (54) for processing the measurement data (64) to obtain an aggregated data (74);
   - A reliability measure determining function (56) for determining an aggregated data reliability measure (76) indicative of the reliability of the aggregated data (74) based on the measurement data reliability measure (64) and the data aggregation function (54),
   - The network interface (52) being adapted for sending, over the network (30), the aggregated data (74) and the aggregated data reliability measure (76).

12. A distributed control system (20) according to claim 11, being configured for carrying out the method according to any one of the claims 1 to 10.

13. A distributed control system (20) according to any one of the claims 11 and 12, comprising a cloud database (32, 33) accessible over the network, wherein the data aggregator module is a cloud node of the network and being configured to output the aggregated data (74) and the aggregated data reliability measure (76) to the cloud database (32, 33).

**FIG. 1**

**FIG. 2**

**FIG. 3**

**FIG. 4**

Europäisches
Patentamt

European
Patent Office

Office européen
des brevets

# EUROPEAN SEARCH REPORT

Application Number

EP 17 17 5066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 709 499 A1 (HONEYWELL INT INC [US]) 11 October 2006 (2006-10-11) * the whole document * | 1-13 | INV. G05B23/02 |
| X | WO 2015/165611 A1 (SIEMENS AG [DE]) 5 November 2015 (2015-11-05) * abstract * * page 1, line 1 - page 8, line 7 * | 1-13 | |
| X | EP 1 936 461 A1 (UNITED TECHNOLOGIES CORP [US]) 25 June 2008 (2008-06-25) * abstract * * paragraph [0006] - paragraph [0019] * * paragraph [0021] - paragraph [0030] * | 1-13 | |

TECHNICAL FIELDS
SEARCHED (IPC)

G05B
G06F
G06Q

The present search report has been drawn up for all claims

| Place of search | Date of completion of the search | Examiner |
|---|---|---|
| The Hague | 6 December 2017 | Kielhöfer, Patrick |

## ANNEX TO THE EUROPEAN SEARCH REPORT
## ON EUROPEAN PATENT APPLICATION NO.

EP 17 17 5066

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2017

| Patent document cited in search report | | | Publication date | Patent family member(s) | | | Publication date |
|---|---|---|---|---|---|---|---|
| EP 1709499 | A1 | | 11-10-2006 | EP | 1709499 | A1 | 11-10-2006 |
| | | | | US | 2005165519 | A1 | 28-07-2005 |
| | | | | US | 2005165520 | A1 | 28-07-2005 |
| | | | | WO | 2005073820 | A1 | 11-08-2005 |
| WO 2015165611 | A1 | | 05-11-2015 | DE | 102014208034 | A1 | 29-10-2015 |
| | | | | EP | 3100122 | A1 | 07-12-2016 |
| | | | | US | 2017046309 | A1 | 16-02-2017 |
| | | | | WO | 2015165611 | A1 | 05-11-2015 |
| EP 1936461 | A1 | | 25-06-2008 | CA | 2613912 | A1 | 22-06-2008 |
| | | | | CN | 101206685 | A | 25-06-2008 |
| | | | | EP | 1936461 | A1 | 25-06-2008 |
| | | | | US | 2008154473 | A1 | 26-06-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016020762 A
- US 2017103043 A
- JP 20083009690 B
- WO 2010137488 A
- DE 6272480